# EUROPÄISCHE PATENTANMELDUNG

(11) **EP 4 231 060 A1**
(43) Veröffentlichungstag der Anmeldung: **23.08.2023**
(21) Anmeldenummer: 22157858.6
(22) Anmeldetag: 22.02.2022
(51) Int. Cl.: G01V 8/20, G01V 8/22, F16P 3/14

(54) **SENSOR**

(71) Anmelder: Leuze electronic GmbH + Co. KG, 73277 Owen/Teck (DE)
(72) Erfinder: Feller, Bernhard, 86316 Friedberg (DE); Jüttner, Andreas, 81543 München (DE); Keßler, Daniela, 89150 Laichingen (DE); Schreiber, Frank, 72574 Bad Urach (DE); Koperski, Joachim, 85521 Ottobrunn (DE)
(74) Vertreter: Ruckh, Rainer Gerhard

(57) **Zusammenfassung**

Die Erfindung betrifft einen Sensor zur Erfassung von Objekten in einem Überwachungsbereich mit Sensorkomponenten und einer Auswerteeinheit (9). In der Auswerteeinheit (9) wird abhängig von Sensorsignalen der Sensorkomponenten ein Objektfeststellungssignal generiert. Der Sensor weist eine Geräteanschlusseinheit (10) auf, welches Anschlussmittel aufweist, die zum Anschluss an ein Anschlussmodul (11) ausgebildet sind. An der Geräteanschlusseinheit (10) ist ein Konfigurationsjumper und/oder ein Konfigurationsspeicher (17) anbringbar. Dadurch ist eine Signalverteilung auf Anschlusselemente des Anschlussmoduls (11) und/oder eine Betriebsart des Sensors vorgebbar.

## Beschreibung

Die Erfindung betrifft einen Sensor.

Derartige optische Sensoren werden generell zur Erfassung von Objekten in einem Überwachungsbereich eingesetzt.

Der Sensor kann insbesondere als optischer Sensor ausgebildet sein.

In der einfachsten Ausführungsform weist der optische Sensor als Sensorkomponente nur einen Lichtstrahlen emittierenden Sender und einen Lichtstrahlen empfangenden Empfänger auf. Der optische Sensor kann dabei als Lichttaster, Distanzsensor, Reflexionslichtschranke und dergleichen ausgebildet sein, wobei bei diesen Ausführungsformen der Sender und der Empfänger in einem gemeinsamen Gehäuse integriert sind. Weiterhin kann der optische Sensor auch als Lichtschranke ausgebildet sein. In diesem Fall sind der Sender und Empfänger in separaten Gehäusen untergebracht.

Generell kann der optische Sensor auch mehrere Sender und/oder Empfänger aufweisen. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist als Elektronikkomponente eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignal ausgebildet sein, dessen Schaltzustände angeben, ob sich ein Objekt im Überwachungsbereich befindet oder nicht. Das Objektfeststellungssignal kann alternativ ein analoges Signal, beispielsweise ein Distanzwert sein.

Zur Ausgabe des Objektfeststellungssignals und ggf. weiterer Ausgangssignale, sowie zur Eingabe von Eingangssignalen, weist der Sensor typischerweise ein Anschlussmodul, wie z.B. einen Steckverbinder, auf.

Nachteilig hierbei ist generell, dass die Anzahl von Anschlusselementen eines solchen Anschlussmoduls eng begrenzt ist. Zudem ist je nach Typ des Anschlussmoduls die Signalverteilung auf die einzelnen Anschlusselemente festgelegt. Eine Konfiguration des Anschlusselements des Anschlussmoduls ist somit nicht möglich.

Der Erfindung liegt die Aufgabe zugrunde einen Sensor der eingangs genannten Art bereitzustellen, welcher flexibel und mit geringem konstruktivem Aufwand an unterschiedliche Anforderungen angepasst werden kann.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen vorgesehen.

Die Erfindung betrifft einen Sensor zur Erfassung von Objekten in einem Überwachungsbereich mit Sensorkomponenten und einer Auswerteeinheit. In der Auswerteeinheit wird abhängig von Sensorsignalen der Sensorkomponenten ein Objektfeststellungssignal generiert. Der Sensor weist eine Geräteanschlusseinheit auf, welches Anschlussmittel ausweist, die zum Anschluss an ein Anschlussmodul ausgebildet sind. An der Geräteanschlusseinheit ist ein Konfigurationsjumper und/oder ein Konfigurationsspeicher anbringbar, durch welche eine Signalverteilung auf Anschlusselemente des Anschlussmoduls und/oder eine Betriebsart des Sensors vorgebbar ist.

Die Erfindung betrifft weiterhin ein entsprechendes Verfahren.

Der erfindungsgemäße Sensor dient zur Erfassung von Objekten in einem Überwachungsbereich. Hierzu weist der Sensor Sensorkomponenten und eine Auswerteeinheit auf, wobei in der Auswerteeinheit abhängig von Sensorsignalen ein Objektfeststellungssignal generiert wird.

Der Sensor weist in an sich bekannter Weise ein Anschlussmodul, wie z.B. einen Steckverbinder auf, der einerseits nur zur Stromversorgung des Sensors dient und andererseits Anschlusselemente aufweist, über welche Eingabesignale in den Sensor eingegeben und Ausgangssignale vom Sensor ausgegeben werden können.

Erfindungsgemäß ist diese Schnittstelle konfigurierbar, so dass die Funktion des Sensors selbst durch eine Betriebsartenwahl vorgegeben werden kann. Alternativ oder zusätzlich kann die Signalverteilung auf die Anschlusselemente je nach Anwendungsfall angepasst werden. Dadurch kann insbesondere eine Anschlusskompatibilität zu unterschiedlichen externen Einheiten, an welche der Sensor mit dem Anschlussmodul angeschlossen werden kann, hergestellt werden.

Diese Konfigurierbarkeit wird dadurch erreicht, dass der Sensor eine Geräteanschlusseinheit mit einem Konfigurationsspeicher und/oder mit Konfigurationsjumpern aufweist.

Mit den Konfigurationsjumpern kann hardwaremäßig eine bestimmte Konfiguration vorgegeben wird. Mit dem Konfigurationsspeicher kann durch dort gespeicherte Konfigurationsdaten eine Konfiguration vorgegeben werden.

Je nach Ausbildung der Konfigurationsjumper und/oder des Konfigurationsspeichers wird eine spezifische Signalverteilung für die Anschlusselemente des Anschlussmoduls und/oder eine Betriebsart des Sensors eingestellt.

Im einfachsten Fall können unterschiedliche Konfigurationsjumper bzw. Konfigurationsspeicher eingesetzt werden, um unterschiedliche Konfigurationen des Sensors vorzugeben.

Gemäß einer ersten vorteilhaften Weiterbildung ist der oder jeder Konfigurationsspeicher über eine Schnittstelle parametrierbar.

Der Konfigurationsspeicher ist dann ein Speichermodul mit einer eigenen Schnittstelle, an welche ein externes Gerät angeschlossen werden kann, um Konfigurationsdaten in den Konfigurationsspeicher einzulesen. Das externe Gerät kann generell von einer Rechnereinheit gebildet sein. Durch Einlesen unterschiedlicher Konfigurationsdaten können unterschiedliche Konfigurationen des Sensors vorgegeben werden.

Gemäß einer zweiten vorteilhaften Weiterbildung sind an der Geräteanschlusseinheit sowohl ein Konfigurationsspeicher als auch Konfigurationsjumper vorgesehen. Dann ist mit Konfigurationsjumpern eine Konfiguration in einem Konfigurationsspeicher auswählbar.

Durch unterschiedliche Einstellungen von Konfigurationsjumpern können somit unterschiedliche Konfigurationen, die durch im Konfigurationsspeicher abgespeicherte Konfigurationsdaten vorgegeben sind, eingestellt werden.

Ein Konfigurationsjumper bildet generell eine leitende Brücke, über welche eine Masse-Verbindung hergestellt werden kann. Zusammen mit einem Pull-up-Widerstand wird mit dem Konfigurationsjumper eine einem Bit entsprechende Information zur Verfügung gestellt. Mit N Konfigurationsjumpern können somit 2^{N} Adressen generiert werden, die zur Auswahl unterschiedlicher Konfigurationen, d.h. Betriebsarten oder Signalverteilungen für das Anschlussmodul herangezogen werden können.

Gemäß einer vorteilhaften konstruktiven Ausgestaltung weist der Sensor wenigstens ein Gehäuse auf, wobei die Geräteanschlusseinheit an einem Gehäuseteil des Gehäuses befestigbar ist.

Dabei ist zwischen dem Gehäuseteil und der Geräteanschlusseinheit eine Dichtung vorgesehen.

Die Nahtstelle zwischen Geräteanschlusseinheit und dem Gehäuse des Sensors ist damit vollständig abgedichtet.

Gemäß einer ersten Variante sind der Konfigurationsspeicher und/oder die Konfigurationsjumper am Gehäuseteil steckbar.

Durch die Steckverbindung bilden der Konfigurationsspeicher und/oder die Konfigurationsjumper eine Baueinheit mit dem Gehäuse, auf welche dann die Geräteanschlusseinheit geführt wird, so das dann bei am Gehäuseteil fixierter Geräteanschlusseinheit der Konfigurationsspeicher und/oder die Konfigurationsjumper von der Geräteanschlusseinheit gegriffen sind.

Gemäß einer zweiten Variante sind der Konfigurationsspeicher und/oder die Konfigurationsjumper an der Geräteanschlusseinheit steckbar.

In diesem Fall bilden durch die Steckverbindung der Konfigurationsspeicher und/oder die Konfigurationsjumper eine Baueinheit mit der Geräteanschlusseinheit, die dann auf das Gehäuseteil aufgesetzt wird, so dass dann bei am Gehäuseteil fixierter Geräteanschlusseinheit des Konfigurationsspeichers und/oder die Konfigurationsjumper von dem Gehäuseteil gegriffen sind.

Generell ist es auch möglich, dass in der Geräteanschlusseinheit fest verdrahtete Konfigurationsjumper vorgesehen sind.

Das insbesondere als Steckverbinder ausgebildete Anschlussmodul kann über ein Kabel mit der Geräteanschlusseinheit verbunden sein.

Dann können vorteilhaft das Anschlussmodul und das Kabel zusammen vorgossen oder gespritzt sein.

Alternativ können die Geräteanschlusseinheit und das Kabel zusammen vergossen oder gespritzt sein.

Der erfindungsgemäße Sensor kann insbesondere als Sicherheitssensor ausgebildet sein, das heißt der Sensor weist dann einen fehlersicheren Aufbau auf, so dass er in sicherheitsrelevanten Applikationen, zum Beispiel im Bereich des Personenschutzes eingesetzt werden kann.

Ein fehlersicherer Aufbau wird insbesondere durch einen redundanten, vorteilhaft zweikanaligen Aufbau der Auswerteeinheit, beispielsweise in Form zweier sich zyklisch gegenseitig überwachenden Rechnereinheiten realisiert.

Wird mit den Rechnereinheiten der Auswerteeinheit ein Fehler realisiert, geht der Sicherheitssensor in den sicheren Zustand, beispielsweise dadurch, dass dieser ein Objektfeststellungssignal generiert, mit dem eine überwachte, gefahrbringende Maschine abgeschaltet wird.

Der erfindungsgemäße Sensor kann prinzipiell ein Radarsensor oder ein Ultraschallsensor sein. Besonders vorteilhaft ist der Sensor ein optischer Sensor.

Der optische Sensor kann insbesondere als Flächendistanzsensor, d.h. als scannender Distanzsensor oder als Lichtvorhang ausgebildet sein.

Die Erfindung wird im Folgenden anhand der Zeichnungen erläutert. Es zeigen:
- Figur 1:: Ausführungsbeispiel des erfindungsgemäßen Sensors in Form eines Lichtvorhangs.
- Figur 2:: Schematische Darstellung des Lichtvorhangs gemäß Figur 1 mit Geräteanschlusseinheit und zugeordnetem Anschlussmodul.
- Figur 3a:: Einzeldarstellung eines Gehäuseteils des Lichtvorhangs mit einer zugeordneten Geräteanschlusseinheit.
- Figur 3b:: Draufsicht auf das Gehäuseteil gemäß Figur 3a.
- Figur 4:: Variante der Ausführungsform gemäß Figur 3a.
- Figur 5:: Spezifische konstruktive Ausgestaltung der Geräteanschlusseinheit gemäß Figur 4.

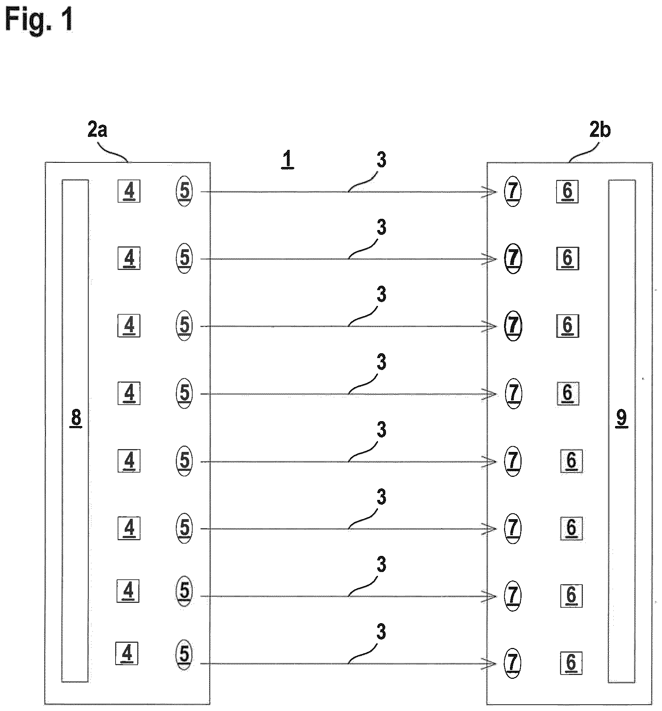

Figur 1 zeigt schematisch den Aufbau eines Ausführungsbeispiels des erfindungsgemäßen Sensors in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 als erste Sensorkomponente und diesen zugeordneten Optikelemente bildenden Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 als zweite Sensorkomponente auf, welche jeweils ein Optikelement in Form einer Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang 1 ausgebildet sein. Dann sind alle Sender 4 und Empfänger 6 in einem Gehäuse 2a oder 2b angeordnet, welche an einem Rand des Überwachungsbereichs angeordnet ist. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Sendersteuerung 8 und/oder Auswerteeinheit 9 kann einen mehrkanaligen Aufbau aufweisen, falls der Lichtvorhang 1 einen Sicherheitssensor bildet. Insbesondere kann die Sendersteuerung 8 und/oder Auswerteeinheit 9 aus zwei sich zyklisch überwachenden Rechnereinheiten bestehen.

Mit dem als Sicherheitssensor ausgebildeten Lichtvorhang 1 wird beispielsweise ein Gefahrenbereich an einer Maschine überwacht. Nur bei freiem Überwachungsbereich wird der Betrieb der Maschine freigegeben. Wird in der Sendersteuerung 8 und Auswerteeinheit 9 ein Fehler aufgedeckt, wird ein Schaltsignal im Lichtvorhang 1 derart generiert, dass die Maschine abgeschaltet wird, das heißt es erfolgt ein Übergang in einen sicheren Zustand.

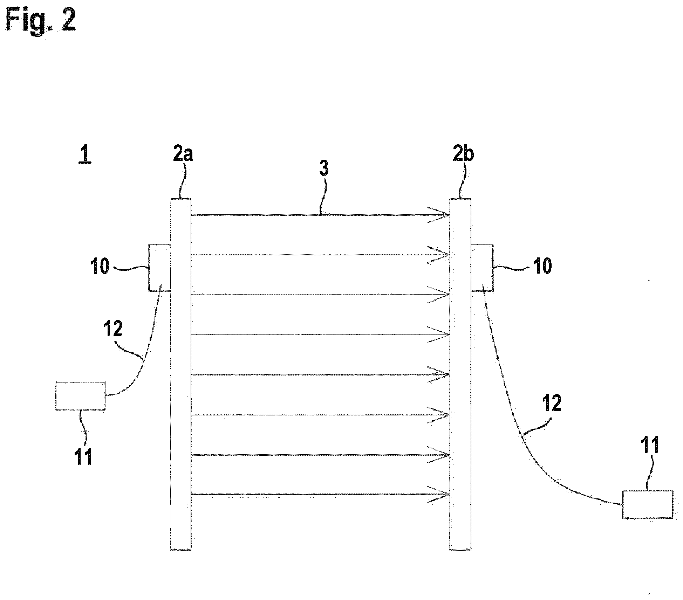

Figur 2 zeigt die erfindungsgemäße Anbringung einer Geräteanschlusseinheit 10 am Lichtvorhang 1, wobei die Geräteanschlusseinheit 10 selbst mit einem Anschlussmodul 11, wie z.B. einem Steckverbinder, verbunden ist. Der Geräteanschluss 10 kann auch mit einem Kabel 12 mit offenem Kabelende ohne Anschlussmodul verbunden sein.

Figur 2 zeigt eine Ausführungsform, bei dem sowohl am Gehäuse 2a der Sendereinheit als auch am Gehäuse 2b der Empfängereinheit vorgesehen ist. Generell kann auch nur an einem Gehäuse 2a, 2b eine Geräteanschlusseinheit 10 vorgesehen sein.

Die oder jede Geräteanschlusseinheit 10 bildet ein Modul als Bestandteil des Sensors, insbesondere Lichtvorhangs 1, aus. Die Geräteanschlusseinheit 10 kann mittels nicht dargestellten Befestigungsmitteln am jeweiligen Gehäuse 2a, 2b befestigt werden.

Im vorliegenden Fall ist jede Geräteanschlusseinheit 10 über ein Kabel 12 mit dem Anschlussmodul 11 verbunden.

Vorteilhaft ist das Anschlussmodul 11 und das Kabel 12 zusammen vorgossen oder gespritzt.

Alternativ ist die Geräteanschlusseinheit 10 und das Kabel 12 zusammen vergossen oder gespritzt.

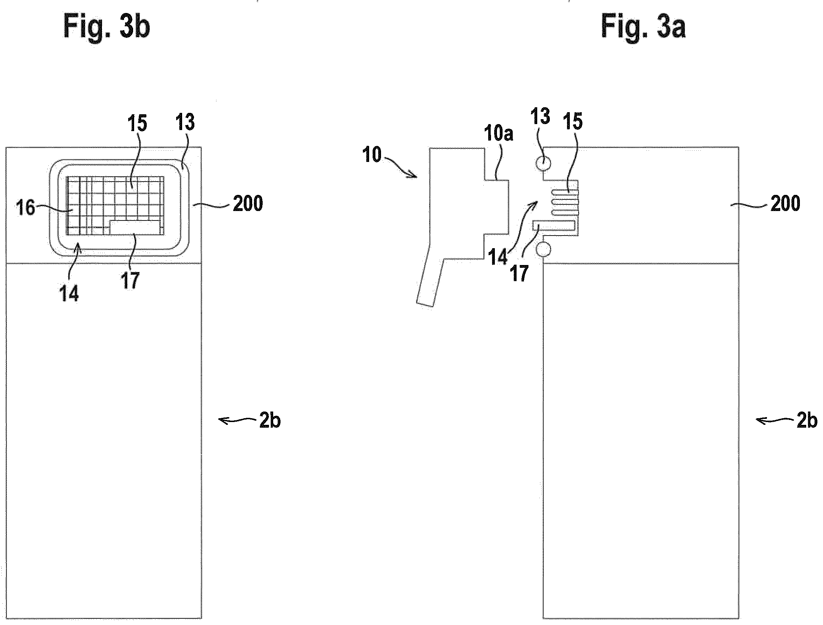

Die Figuren 3a, 3b zeigen einen Ausschnitt des Gehäuses 2b des Lichtvorhangs 1 mit einem Gehäuseteil 200 an dessen Oberseite. An diesem Gehäuseteil 200 kann die Geräteanschlusseinheit 10 (dargestellt in Figure 3b) befestigt werden. Im vorliegenden Fall kann die Geräteanschlusseinheit 10 mit einem Vorsprung 10a in einer korrespondierenden Aufnahme des Gehäuseteil 200 eingesteckt und eingerastet werden.

An dem Gehäuseteil 200 ist eine Dichtung 13 vorgesehen. Mit dieser Dichtung 13 wird die Nahtstelle zwischen dem Gehäuseteil 200 und der Geräteanschlusseinheit 10 vollständig abgedichtet.

Die Dichtung 13 umgibt ein an dieser Stirnseite des Gehäuseteils 200 freiliegendes Anschlussfeld 14 mit Anschlusskontakten 15, die mit Anschlusselementen des Anschlussmoduls 11 verbindbar sind, mit einem Jumperfeld 16 und mit einem Anschluss für einen Konfigurationsspeicher 17, wobei, wie in Figur 3b veranschaulicht, der Konfigurationsspeicher 17 dort einsteckbar ist. An dem Jumperfeld 16 können Konfigurationsjumper angebracht werden. Die Konfigurationsjumper bilden elektrisch leitende Brücken aus, über die eine elektrische Verbindung nach Masse, zu einer Betriebsspannung oder zu anderen Kontakten hergestellt werden kann. Zusammen mit einem Pull-up-, Pull-down-Widerstand oder einer Verbindung zu einem anderen Kontakt, kann ein Bit mit zwei Bitwerten kodiert werden.

Im Konfigurationsspeicher 17 sind Konfigurationsdaten abgespeichert. Ist die Geräteanschlusseinheit 10 mit dem Anschlussfeld 14 des Gehäuseteils 200 verbunden, werden entsprechend den Konfigurationsdaten im Konfigurationsspeicher 17 Signalverteilungen vorgenommen, d.h. Ein- und Ausgangssignale des Lichtvorhangs 1 bestimmten Anschlusselementen des Anschlussmoduls 11 zugeordnet. Zudem kann mit den Konfigurationsdaten eine Betriebsartenwahl für den Lichtvorhang 1 vorgenommen werden.

An dem Anschlussfeld 14 können prinzipiell unterschiedliche Konfigurationsspeicher 17 mit unterschiedlichen Konfigurationsdaten angebracht werden. Dementsprechend können unterschiedliche Signalverteilungen auf die Anschlusselemente des Anschlussmoduls 11 und/oder verschiedene Betriebsarten eingestellt werden.

Weiterhin ist es möglich, dass der oder jeder Konfigurationsspeicher 17 über eine Schnittstelle parametrierbar ist.

Die Funktionalität der Geräteanschlusseinheit 10 kann dadurch erweitert sein, dass zusätzlich zum Konfigurationsspeicher 17 am Jumperfeld 16 Konfigurationsjumper angeordnet sind.

Dann kann mit Konfigurationsjumpern eine Konfiguration in einem Konfigurationsspeicher 17 ausgewählt werden.

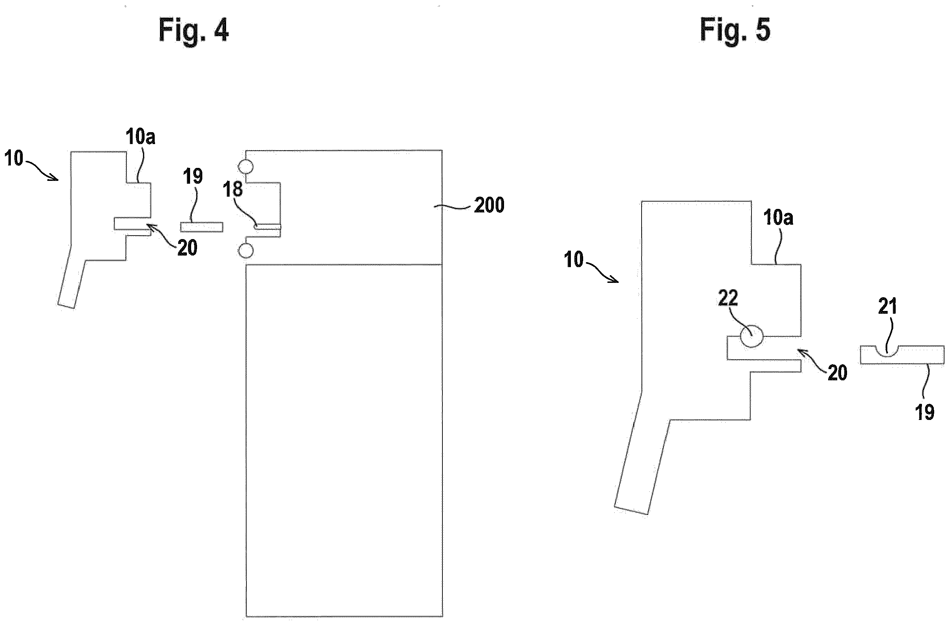

Figur 4 zeigt eine Variante der Ausführungsform gemäß den Figuren 3a und 3b. Figur 4 zeigt einen Anschlusspin 18 als Anschluss auf, an welchen eine Jumperbrücke 19 mit Konfigurationsjumpern aufsteckbar ist. Bei Befestigen der Geräteanschlusseinheit 10 am Gehäuseteil 200 wird die Jumperbrücke 19 in einer Aussparung 20 an der Geräteanschlusseinheit 10 eingeführt d.h. die Jumperbrücke 19 wird von der Geräteanschlusseinheit 10 gegriffen.

Figur 5 zeigt eine vergrößerte Teildarstellung der Anordnung von Figur 4. Wie aus Figur 5 ersichtlich, weist die Jumperbrücke 19 eine Kerbe 21 auf.

Wird die Jumperbrücke 19 in die Aussparung 20 der Geräteanschlusseinheit 10 eingeführt, ist eine Klemmeinrichtung 22 in die Kerbe 21 eingeführt, wodurch die Jumperbrücke 19 an der Geräteanschlusseinheit 10 fixiert ist. Die Klemmeinrichtung 22 kann ein elastisches Element z.B. eine Feder, eine Klammer, ein Elastomerelement und dergleichen sein.

Mit dem Konfigurationsjumper der Jumperbrücke 19 können auf gleiche Weise wie mit dem Konfigurationsspeicher 17 Signalverteilungen für Anschlusselemente der Anschlussmodule 11 und auch Betriebsarten des Lichtvorhang 1 vorgegeben sein.

Eine solche Jumperbrücke 19 kann, natürlich auch auf der Geräteseite eingeführt sein und die entsprechenden Verbindungen in der Geräteanschlusseinheit 10 herstellen.

Bei den Anordnungen der Figuren 4 und 5 kann wie Jumperbrücke 19 auch durch einen Konfigurationsspeicher 17 ersetzt sein.

Ein solcher Konfigurationsspeicher 19 kann natürlich auch auf der Geräteseite eingeführt sein und entsprechende Verbindungen in der Geräteanschlusseinheit 10 herstellen, die dann über andere Kontakte eine elektrische Verbindung zur Geräteseite herstellen.

### B ezugszei chenli ste

- (1): Lichtvorhang
- (2a): Gehäuse
- (2b): Gehäuse
- (3): Lichtstrahlen
- (4): Sender
- (5): Sendeoptik
- (6): Empfänger
- (7): Empfangsoptik
- (8): Sendersteuerung
- (9): Auswerteeinheit
- (10): Geräteschlusseinheit
- (10a): Vorsprung
- (11): Anschlussmodul
- (12): Kabel
- (13): Dichtung
- (14): Anschlussfeld
- (15): Anschlusskontakt
- (16): Jumperfeld
- (17): Konfigurationsspeicher
- (18): Anschlusspin
- (19): Jumperbrücke
- (20): Aussparung
- (21): Kerbe
- (22): Klemmeinrichtung
- (200): Gehäuseteil

## Patentansprüche

1. Sensor zur Erfassung von Objekten in einem Überwachungsbereich mit Sensorkomponenten und einer Auswerteeinheit (9), wobei in der Auswerteeinheit (9) abhängig von Sensorsignalen der Sensorkomponenten ein Objektfeststellungssignal generiert wird, **dadurch gekennzeichnet, dass** der Sensor eine Geräteanschlusseinheit (10) aufweist, welches Anschlussmittel ausweist, die zum Anschluss an ein Kabel (12) oder ein Anschlussmodul (11) ausgebildet sind, und dass an der Geräteanschlusseinheit (10) Konfigurationsjumper und/oder ein Konfigurationsspeicher (17) anbringbar sind, wodurch eine Betriebsart des Sensors vorgebbar ist und/oder eine Signalverteilung auf Anschlusselemente des Anschlussmoduls (11) vorgebbar ist.

2. Sensor nach Anspruch 1, **dadurch gekennzeichnet, dass** dessen Eingangs- und/oder Ausgangssignale mittels des Konfigurationsspeichers (17) und/oder der Konfigurationsjumper Anschlusselementen des Anschlussmoduls (11) zugeordnet werden.

3. Sensor nach einem der Ansprüche 1 oder 2, **dadurch gekennzeichnet, dass** unterschiedliche Konfigurationsjumper oder Konfigurationsspeicher (17) an der Geräteanschlusseinheit (10) anbringbar sind.

4. Sensor nach einem der Ansprüche 1 bis 3, **dadurch gekennzeichnet, dass** der oder jeder Konfigurationsspeicher (17) über eine Schnittstelle parametrierbar ist.

5. Sensor nach einem der Ansprüche 1 bis 4, **dadurch gekennzeichnet, dass** mit Konfigurationsjumpern eine Konfiguration in einem Konfigurationsspeicher (17) auswählbar ist.

6. Sensor nach einem der Ansprüche 1 bis 5, **dadurch gekennzeichnet, dass** dieser wenigstens ein Gehäuse (2a, 2b) aufweist, wobei die Geräteanschlusseinheit (10) an einem Gehäuseteil (200) des Gehäuses (2a, 2b) befestigbar ist.

7. Sensor nach Anspruch 6, **dadurch gekennzeichnet, dass** der Konfigurationsspeicher (17) und/oder Konfigurationsjumper aufweisende Jumperbrücken (19) am Gehäuseteil (200) oder in der Geräteanschlusseinheit (10) steckbar sind.

8. Sensor nach Anspruch 7, **dadurch gekennzeichnet, dass** bei am Gehäuseteil (200) fixierter Geräteanschlusseinheit (10) der Konfigurationsspeicher (17) und/oder die Jumperbrücken (19) von der Geräteanschlusseinheit (10) oder Gehäuseteil (200) gegriffen sind.

9. Sensor nach Anspruch 6, **dadurch gekennzeichnet, dass** der Konfigurationsspeichers (17) und/oder die Jumperbrücken (19) an der Geräteanschlusseinheit (10) oder Gehäuseteil (299) steckbar sind.

10. Sensor nach Anspruch 9, **dadurch gekennzeichnet, dass** bei am Gehäuseteil (200) fixierter Geräteanschlusseinheit (10) des Konfigurationsspeichers (17) und/oder die Jumperbrücken (19) von dem Gehäuseteil (200) gegriffen sind.

11. Sensor nach Anspruch 6, **dadurch gekennzeichnet, dass** in der Geräteanschlusseinheit (10) fest verdrahtete Jumperbrücken (19) vorgesehen sind.

12. Sensor nach einem der Ansprüche 5 bis 11, **dadurch gekennzeichnet, dass** zwischen dem Gehäuseteil (200) und der Geräteanschlusseinheit (10) eine Dichtung (13) vorgesehen ist.

13. Sensor nach einem der Ansprüche 1 bis 12, **dadurch gekennzeichnet, dass** das Anschlussmodul (11) ein Steckverbinder ist.

14. Sensor nach einem der Ansprüche 1 bis 13, **dadurch gekennzeichnet, dass** das Anschlussmodul (11) über ein Kabel (12) mit der Geräteanschlusseinheit (10) verbunden ist.

15. Sensor nach Anspruch 14, **dadurch gekennzeichnet, dass** das Anschlussmodul (11) und das Kabel (12) zusammen vorgossen oder gespritzt sind.

16. Sensor nach Anspruch 14, **dadurch gekennzeichnet, dass** die Geräteanschlusseinheit (10) und das Kabel (12) zusammen vergossen oder gespritzt sind.

17. Sensor nach einem der Ansprüche 1 bis 16, **dadurch gekennzeichnet, dass** dieser ein optischer Sensor ist.

18. Sensor nach Anspruch 17, **dadurch gekennzeichnet, dass** der optische Sensor in Form eines Lichtvorhangs (1) oder Flächendistanzsensors ausgebildet ist.

19. Sensor nach einem der Ansprüche 1 bis 18, **dadurch gekennzeichnet, dass** dieser ein Sicherheitssensor ist.

20. Verfahren zum Betrieb eines Sensor zur Erfassung von Objekten in einem Überwachungsbereich mit Sensorkomponenten und einer Auswerteeinheit (9), wobei in der Auswerteeinheit (9) abhängig von Sensorsignalen der Sensorkomponenten ein Objektfeststellungssignal generiert wird, **dadurch gekennzeichnet, dass** der Sensor eine Geräteanschlusseinheit (10) aufweist, welches Anschlussmittel ausweist, die zum Anschluss an ein Anschlussmodul (11) ausgebildet sind, und dass an der Geräteanschlusseinheit (10) Konfigurationsjumper und/oder ein Konfigurationsspeicher (17) anbringbar sind, durch welche eine Signalverteilung auf Anschlusselemente des Anschlussmoduls (11) und/oder eine Betriebsart des Sensors vorgebbar ist.
